# EUROPÄISCHE PATENTSCHRIFT

(11) **EP 0 338 187 B1**
(45) Veröffentlichungstag und Bekanntmachung des Hinweises auf die Patenterteilung: **29.12.1993**
(21) Anmeldenummer: 89100535.7
(22) Anmeldetag: 13.01.1989
(51) Int. Cl.: H01R 31/08, H04Q 1/14, H01R 13/713

(54) **Schutzstecker für Schalt- oder Trennleisten**
Safety plug for switching or disconnecting rails
Fiche de protection pour boîters d'interuption ou de disjonction

(30) Priorität: 20.04.1988 DE 3813889
(43) Veröffentlichungstag der Anmeldung: 25.10.1989
(73) Patentinhaber: KRONE Aktiengesellschaft, D-14167 Berlin (DE)
(72) Erfinder: Hegner, Gunter, D-1000 Berlin 37 (DE); Achtnig, Klaus-Dieter, D-1000 Berlin 45 (DE)

(56) Entgegenhaltungen:
- EP-A- 0 194 123
- EP-A- 0 200 883
- EP-A- 0 204 675

## Beschreibung

Die Erfindung bezieht sich auf einen Schutzstecker für mit einer Sammelerde versehene Schalt- oder Trennleisten der Fernmeldetechnik, gemäß dem Oberbegriff des Anspruches 1.

Aus der DE-A-3709875 ist ein Schutzstecker der gattungsgemäßen Art bekannt. Dieser Schutzstecker besteht aus zwei Gehäusehalbschalen, in deren Innenraum ein Schutzhybrid mit zwei parallelen Leiterbahnen angeordnet ist. Die Leiterbahnen sind über Leiterkontakte mit den a-b Adern bzw. a'-b' Adern der Fernmeldeleitung verbunden. Des weiteren sind nebeneinander liegende Überspannungsableiter angeordnet, die zwischen Leiterbahnen des Schutzhybrides und einem Erdblech gehalten sind. Das unterhalb des Schutzhybrides angeordnete Erdblech besitzt zur Halterung der Überspannungsableiter zwei federnde Blechlappen, die zur Bildung von U-förmigen Klammern quer zu den Längsseiten des Erdbleches abgewinkelt sind. Um die Überspannungsableiter auf Erde zu schalten, sind zwei weitere Blechlappen notwendig. Diese Blechlappen weisen jeweils einen Schenkel auf, der zu den Leiterbahnen auf Abstand steht. Nachteilig ist bei diesem Schutzstecker, daß durch die Anordnung von zwei nebeneinander liegenden Überspannungsableitern und durch das mehrere Blechlappen aufweisende Erdblech die Breite und die Dicke des Gehäuses erheblich vergrößert ist.

Beim Einstecken des Schutzsteckers in eine Schalt- oder Trennleiste ist somit die Rangierseite der Leiste verdeckt, so daß zum Anschließen und Entfernen (Rangieren) von Kabeladern zuerst der Schutzstecker gezogen werden muß. Ein weiterer Nachteil besteht darin, daß das Gehäuse des Schutzsteckers zweiteilig ausgebildet ist.

Der Erfindung liegt von daher die Aufgabe zugrunde, einen Schutzstecker der gattungsgemäßen Art zu schaffen, dessen Gehäuse möglichst klein ausgebildet ist und bei dessen Verwendung die an der Rangierseite einer Schalt- oder Trennleiste angeschlossenen Kabel auch nach dem Einstecken des Schutzsteckers zugänglich sein sollen.

Die Lösung dieser Aufgabe ergibt sich aus den kennzeichnenden Merkmalen des Anspruches 1. Die Überspannungsableiter werden erst nach dem Aufstecken des Schutzsteckers auf eine Schalt- oder Trennleiste mit der Sammelerde kontaktiert, wodurch eine Erdverbindung hergestellt ist. Erfindungsgemäß ist die Sammelerde außerhalb des Schutzsteckergehäuses angeordnet, wodurch das Gehäuse erheblich verkleinert ausgebildet ist. Durch Verkleinerung des Gehäuses des Schutzsteckers sind die an der Rangierseite angeschlossenen Kabeladern der Schalt- oder Trennleiste auch nach dem Aufstecken des Schutzsteckers zugänglich, so daß Rangierungen, z.B. das Lösen von bereits angeschlossenen Kabeladern, auch ohne ein Entfernen des Schutzsteckers möglich sind. Darüber hinaus ist der Schutzstecker aus einem einteiligen Gehäuse aufgebaut, so daß sich der Schutzstecker erheblich billiger herstellen läßt.

Weitere vorteilhafte Ausgestaltungen der Erfindung ergeben sich aus den Unteransprüchen. Hierbei wird insbesondere auf die Ausführungsform gemäß den Ansprüchen 6, 7 und 8 hingewiesen, wodurch die Laschen der Sammelerde zur Kontaktierung der Überspannungsableiter nur eine geringe Länge aufweisen.

Die Erfindung ist nachfolgend anhand mehrerer Ausführungsbeispiele eines Schutzsteckers näher erläutert. Es zeigen:
- Fig. 1: einen Längsschnitt durch den in eine Anschlußleiste eingesteckten Schutzstecker in der ersten Ausführungsform,
- Fig. 2: die Hauptansicht des Schutzsteckers,
- Fig. 3: einen Querschnitt gemäß der Linie III-III,
- Fig. 4: einen Querschnitt gemäß der Linie III-III mit Sammelerde,
- Fig. 5: eine Perspektivansicht des Schutzsteckers in der zweiten Ausführungsform mit Sammelerde, Anschlußleiste und Montagebügel,
- Fig. 6: einen Längsschnitt durch den in eine Anschlußleiste eingesteckten Schutzstecker in der zweiten Ausführungsform,
- Fig. 7: die Rückansicht des Schutzsteckers,
- Fig. 8: einen Längsschnitt durch den Schutzstecker,
- Fig. 9: die Hauptansicht des Schutzsteckers,
- Fig. 10: einen Querschnitt gemäß der Linie X-X,
- Fig. 11: einen Querschnitt gemäß der Linie XI-XI,
- Fig. 12: einen Längsschnitt durch den Schutzstecker in der dritten Ausführungsform,
- Fig. 13: die Rückansicht der Sammelerde mit einem aufgestecken Schutzstecker,
- Fig. 14: einen Längsschnitt durch den Schutzstecker,
- Fig. 15: die Hauptansicht des Schutzsteckers,
- Fig. 16: einen Querschnitt gemäß der Linie XVI-XVI.
- Fig. 17: die Hauptansicht des Schutzsteckers der vierten Ausführungsform und
- Fig. 18: einen Längsschnitt gemäß der Linie XVIII-XVIII.

Der Schutzstecker 1 besteht aus einem einteiligen Kunststoffgehäuse 2, wobei die Frontseite 10 des Gehäuses 2 offen ausgebildet ist. Diese Frontseite 10 wird durch Einstecken einer Lasche 11 einer Sammelerde 5 in einen Einsteckkanal 48 oder durch ein Blechteil 50 verschlossen, wie es später noch näher erläutert werden wird.

Im Innenraum 12 des Gehäuses 2 sind zwei streifenförmige Leiterkontakte 13,14 aus metallischem Werkstoff eingelegt, deren Enden 15,16 aus dem Gehäuse 2 des Schutzsteckers 1 herausgeführt und durch Haltestege 49 im Gehäuse 2 fixiert sind. Diese Enden 15,16 bilden mit einem zwischen den Enden 15,16 angeordneten, am Gehäuse 1 angeformten Kunststoffsteg 17 den Einsteckteil 18 des Schutzsteckers 1. Der Kunststoffsteg 17 weist hierbei eine Rastnase 43 auf.

Die im Gehäuse 1 angeordneten Teile der Leiterkontakte 13,14 sind lose in Führungsnuten 21,22 eingelegt und dienen zur Kontaktierung von Überspannungsableitern 3.

Die beiden im Gehäuse 1 angeordneten Teile der Leiterkontakte 13,14 sind unterschiedlich ausgebildet.

Der Leiterkontakt 13 ist U-förmig und der Leiterkontakt 14 S-förmig ausgebildet, wobei beide abgewinkelten Enden 19,20 der Leiterkontakte 13,14 in einer Führungsnut 23 aufgenommen sind, die parallel zwischen den Führungsnuten 21,22 verläuft.

Die beiden Enden 19, 20 der Leiterkontakte 13, 14 sind darüber hinaus zur Bildung von Kurzschlußbügeln 25, 26 rechtwinklig in Richtung der offenen Frontseite 10 abgebogen. Die Enden der Kurzschlußbügel 25,26 greifen in der Ruhestellung in den Einsteckkanal 48 ein.

Die im Gehäuse 1 angeordneten Teile der Leiterkontakte 13, 14 sind federnd vorgespannt, so daß sie erst nach dem Einsetzen der Überspannungsableiter 3 in die Führungsnuten 21, 22 und 23 eingedrückt werden.

Die Überspannungsableiter 3 sind von der offenen Frontseite 10 in den Schutzstecker 1 eingesetzt und liegen federnd mit dem einen Anschluß 29 an einer zwischen den Leiterkontakten 13, 14 und den Überspannungsableitern 3 eingesetzten Schmelzpille 30 an. Durch die federnde Anlage ist eine sichere Kontaktierung gewährleistet.

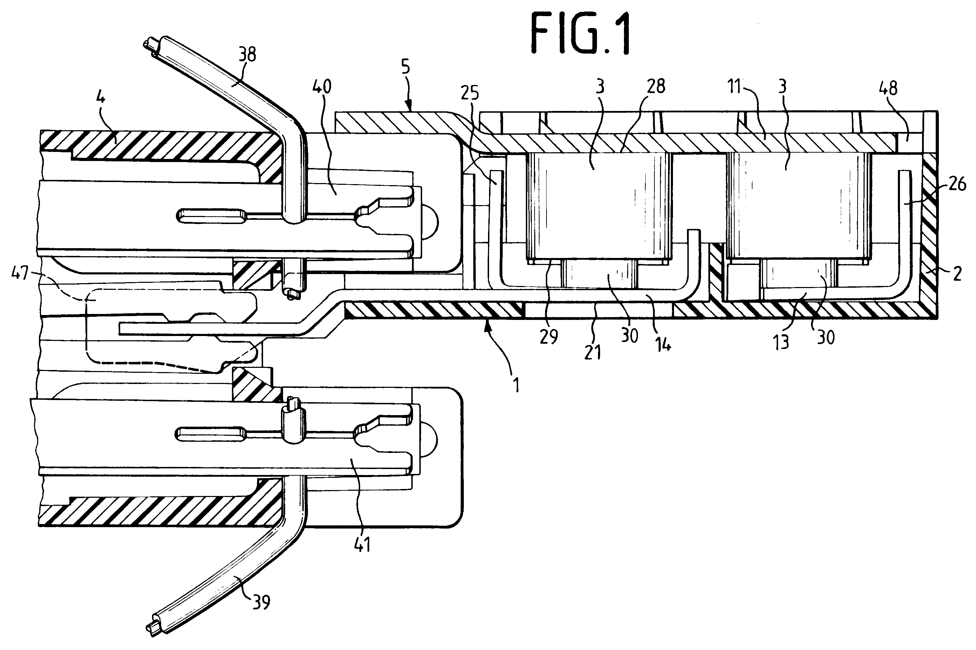

Auf der anderen Polseite 28 wird der Überspannungsableiter 3 in der ersten Ausführungsform gemäß den Figuren 1 bis 4 als Gegenanlage von den an den Gehäuselängsseiten 8 angeordneten federnden Rasthaken 6, 7 gehalten und somit im Gehäuse 2 des Schutzsteckers 1 fixiert. Die Enden 32 der Rasthaken 6, 7 sind zueinander zur Längsachse 9 des Gehäuses 2 gerichtet.

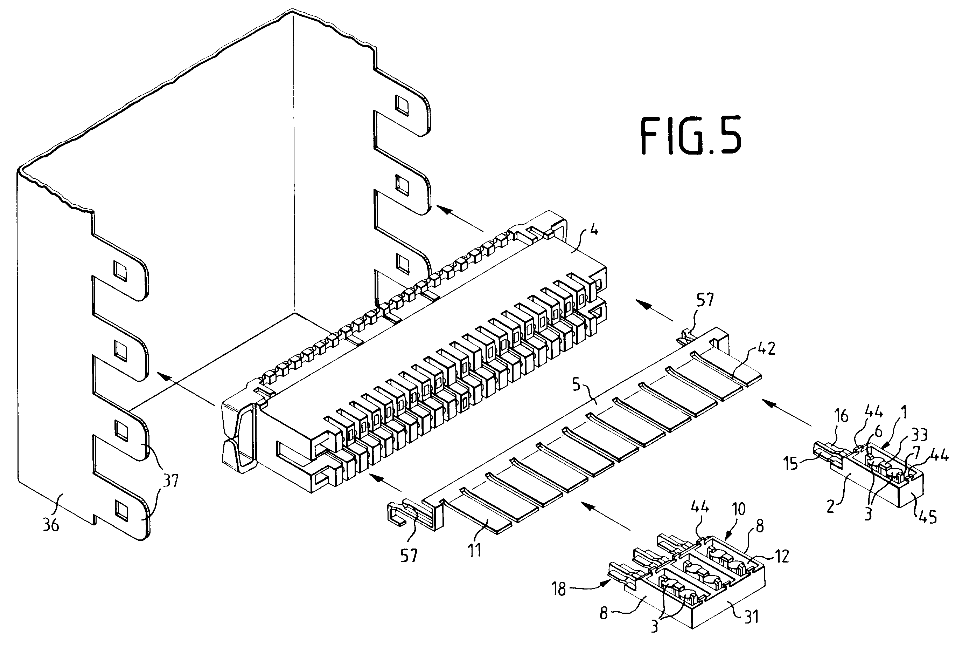

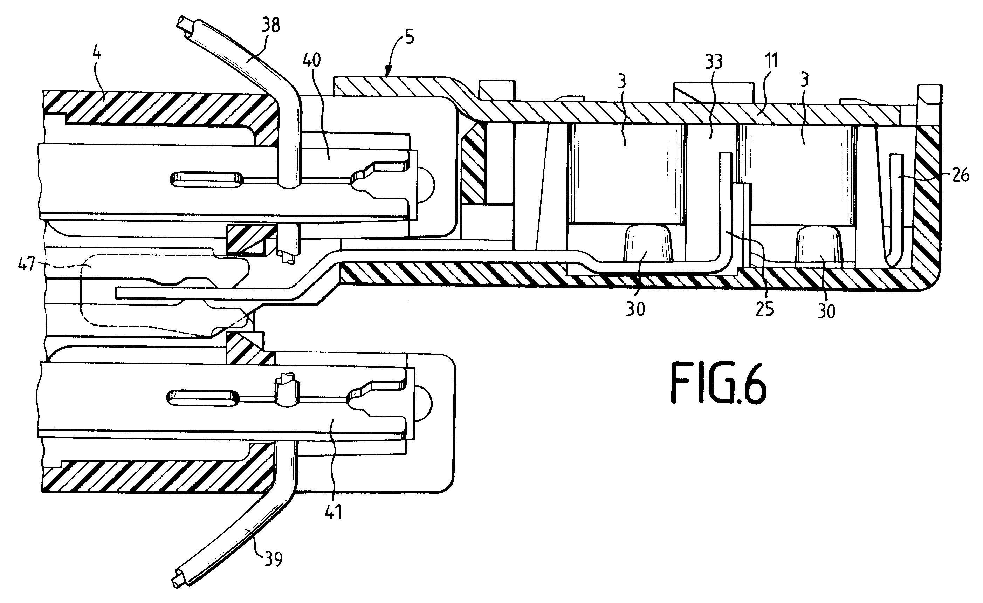

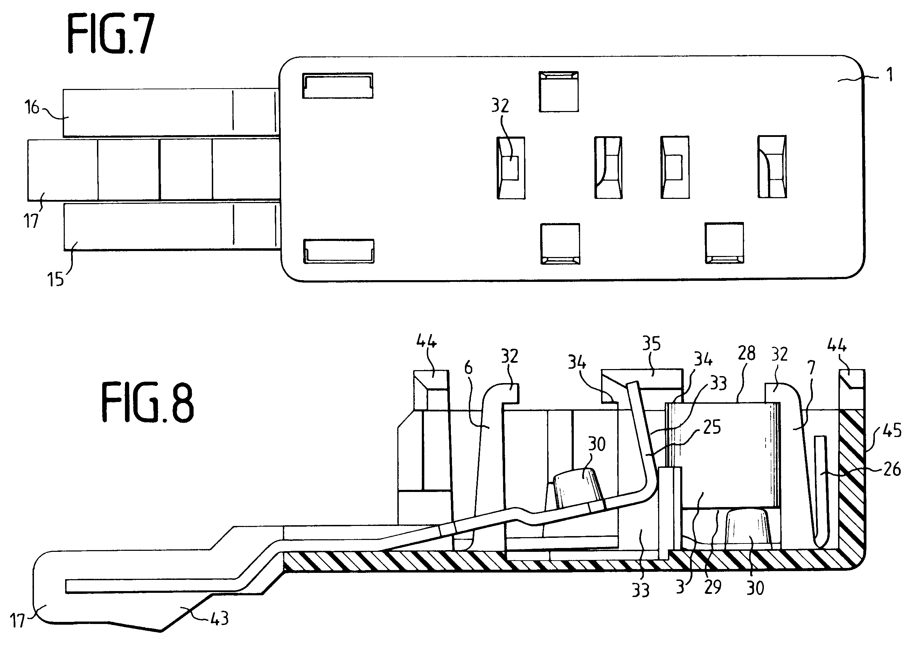

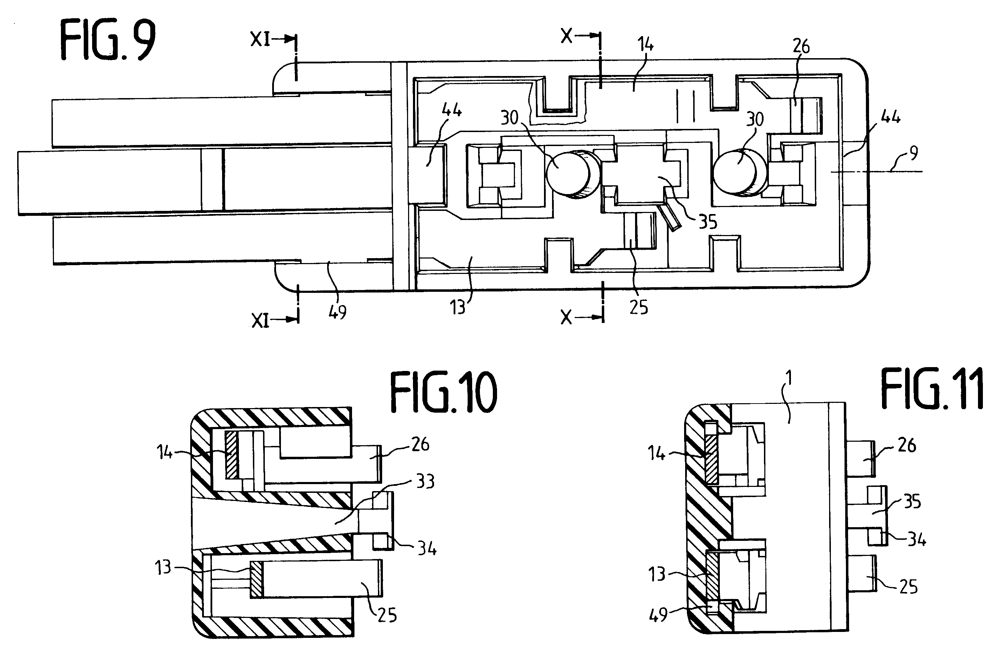

In der zweiten Ausführungsform gemäß den Figuren 5 bis 11 sind die Rasthaken 6, 7 mittig auf der Längsachse 9 angeordnet, auf der des weiteren ein Mittelsteg 33 vorgesehen ist. Der Mittelsteg 33 weist zwei Klemmkanten 34 zur beidseitigen Anlage der Überspannungsableiter 3 und einen Führungssteg 35 zur Führung der Laschen 11 der Sammelerde 5 auf, wie es später noch näher beschrieben wird. Die Überspannungsableiter 3 werden somit beidseitig durch einen Rasthaken 6, 7 und durch die Klemmkante 34 des Mittelsteges 33 im Gehäuse 2 des Schutzsteckers 1 gehalten.

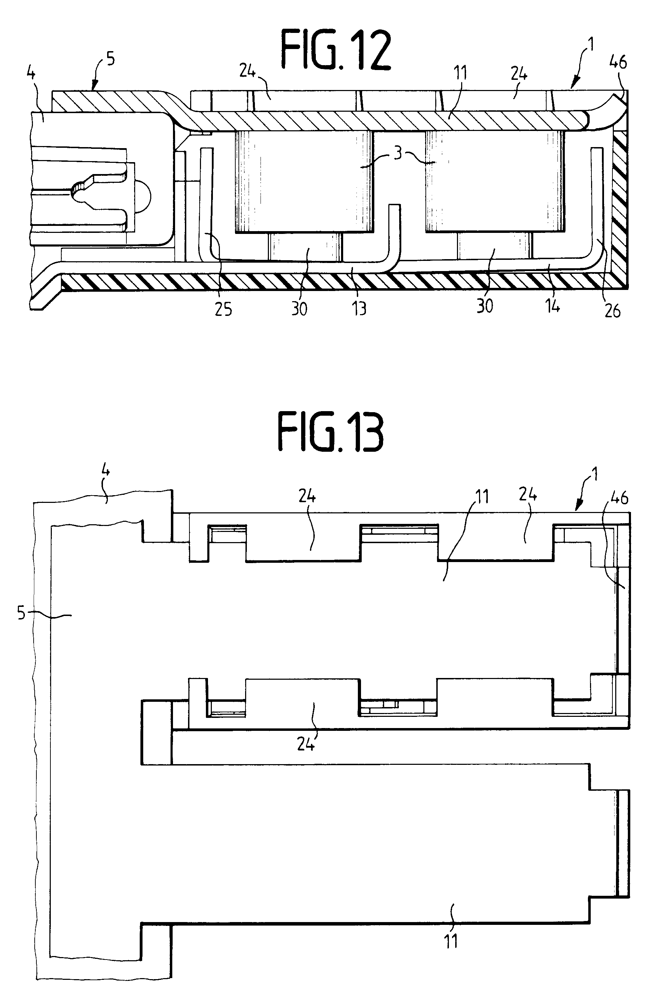

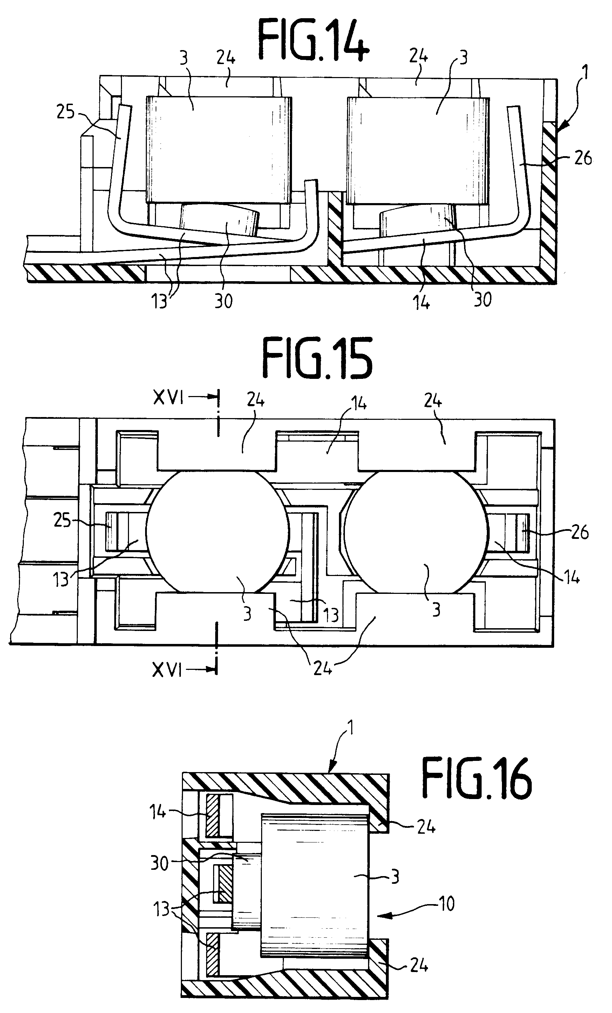

In der dritten Ausführungsform (Figuren 12 bis 16) werden die Überspannungsableiter 3 durch Ansatzstege 24 des Gehäuses 2 gehalten. Die Ansatzstege 24 greifen in die offene Frontseite 10 ein, wobei für die beiden Überspannungsableiter 3 jeweils zwei Ansatzstege 24 vorgesehen sind.

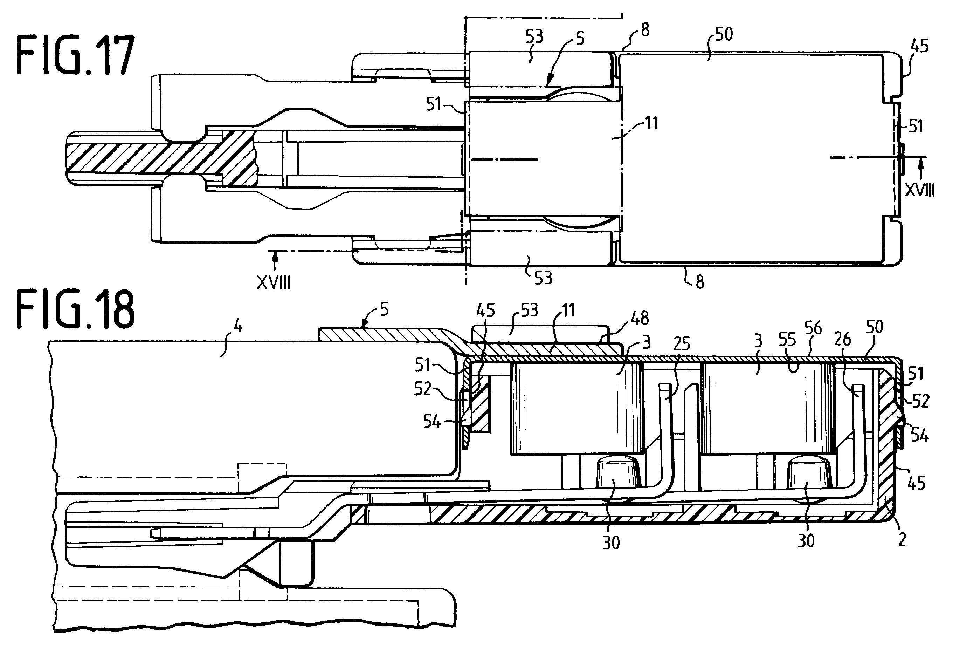

In der vierten Ausführungsform (Figuren 17 und 18) werden die Überspannungsableiter 3 durch ein Blechteil 50 im Gehäuse 2 gehalten, das im Querschnitt U-förmig mit rechtwinklig abgebogenen Seitenwänden 51 ausgebildet ist. Die Seitenwände 51 weisen Öffnungen 52 auf, in die an den beiden Schmalseiten 45 des Gehäuses 2 angeordnete Rasthaken 54 einrasten und somit das Blechteil 50 am Gehäuse 2 befestigen. Durch das Blechteil 50 wird die offene Frontseite 10 des Schutzsteckers 1 geschlossen. An der Innenseite 55 des Blechteiles 50 liegen die Polseiten 28 der Überspannungsableiter 3 an, die Außenseite 55 des Blechteiles 50 ist dem Einsteckkanal 48 zugewandt.Die Überspannungsableiter 3 sind somit elektrisch mit dem Blechteil 50 verbunden. Die Innenseite 55 des Blechteiles 50 dient darüber hinaus als Kontaktfläche für die Kurzschlußbügel 25,26.

Nachfolgend wird der Aufbau und das Aufstecken des Schutzsteckers 1 auf die Schalt- oder Trennleiste 4 näher erläutert.

Gemäß Figur 5 wird die aus Kunststoff bestehende Schalt- oder Trennleiste 4 auf Laschen 37 eines metallischen, mit einer Erdleitung verbundenen Montagebügels 36 aufgesteckt und mit diesem verrastet. Eine solche, auf einen Montagebügel 36 aufrastbare Schalt- oder Trennleiste besteht aus einem Unterteil und einem mit diesem verrasteten Oberteil. An der Schalt- oder Trennleiste 4 sind auf der einen Seite (Kabelseite) die von den Fernsprechteilnehmern kommenden Kabeladern 38 und auf der anderen Seite (Rangierseite) die zu den vermittlungstechnischen Einrichtungen führenden Rangieradern 39 an in zwei Reihen angeordneten Schneid--Klemm-Kontaktstücken 40, 41 angeschlossen. Das Schneid-Klemm-Kontaktstück 40 der einen Reihe ist über ein Gabelkontaktstück 47 mit dem Schneid-Klemm-Kontaktstück 41 der anderen Reihe verbunden.

Parallel zur Schalt- oder Trennleiste 4 wird eine metallische Sammelerde 5 aufgesteckt. Die Sammelerde 5 besitzt an den Stirnseiten zwei Gabelkontaktstücke 57, die über die Laschen 37 des Montagebügels 36 greifen und somit die Sammelerde 5 elektrisch mit dem Montagebügel 36 verbinden.

Die Sammelerde 5 weist mehrere Laschen 11 mit dazwischenliegenden Schlitzen 42 auf. Je Doppelader (a-b Ader) ist eine Lasche 11 vorgesehen.

Wird ein Überspannungsschutz für die an der Schalt- oder Trennleiste 4 angeschlossene Kabelader 38 benötigt, so wird für jede Doppelader ein Schutzstecker 1 in die Leiste 4 zwischen den beiden Reihen von Schneid-Klemm-Kontaktstücken 40, 41 in den Gabelkontakt 47 eingesteckt.

Die Rastnase 43 des Einsteckteiles 18 des Schutzsteckers 1 rastet hierbei in die Leiste 4 ein. Die Gabelkontakte 47 greifen über die Leiterkontaktenden 15,16, so daß die Kabeladern 38, 39 mit den Leiterkontakten 13, 14 elektrisch verbunden sind. Jeweils eine Lasche 11 der Sammelerde 5 greift in einen Einsteckkanal 48 eines Schutzsteckers 1 ein.

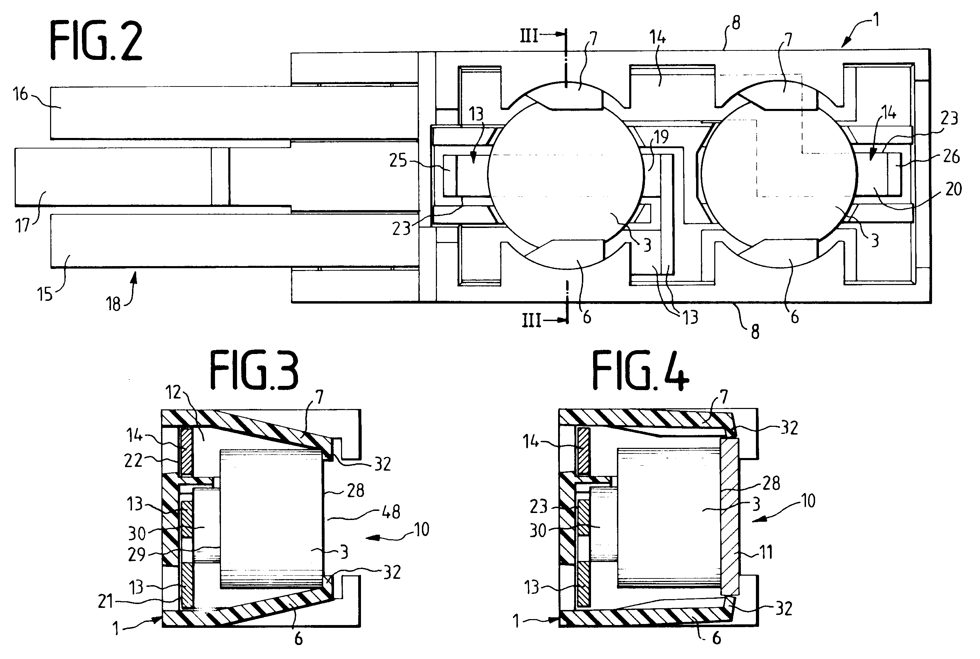

In der ersten Ausführungsform des Schutzsteckers 1 (Fig. 1 bis 4) drücken die Laschen 11 die die Überspannungsableiter 3 haltenden Haken 6, 7 beiseite - wie in Fig. 4 dargestellt - und kontaktieren die eine Polseite 28 der Überspannungsableiter 3, die somit mit Erde verbunden sind. Die Überspannungsableiter 3 werden durch die federnden Leiterkontaktstücke 13,14 an die Laschen 11 der Sammelerde 5 gedrückt, wodurch eine sichere Kontaktierung zwischen den Laschen 11 und der Polseite 28 der Überspannungsableiter 3 hergestellt ist. Beim Herausziehen des Schutzsteckers 1 aus der Schalt- oder Trennleiste 4 greifen die Rasthaken 6, 7 wieder hinter die eine Polseite 28 der Überspannungsableiter 3 und fixieren sie erneut im Gehäuse 2 des Schutzsteckers 1.

In der zweiten Ausführungsform des Schutzsteckers 1 (Fig. 5 bis 11) überdecken die Laschen 11 jeweils eine Hälfte der Frontseite 10 des Schutzsteckers 1, so daß der zwischen den Laschen 11 befindliche Schlitz 42 mittig auf der Längsachse 9 des Schutzsteckers 1 verläuft und die Rasthaken 6, 7 und den Führungssteg 35 des Mittelsteges 33 aufnimmt. Zur besseren Führung der Laschen 11 sind darüber hinaus zwei weitere Führungsstege 44 an der Frontseite 10 an den Schmalseiten 45 angeordnet.

In der dritten Ausführungsform (Fig. 12 bis 16) werden die Laschen 11 beim Einstecken des Schutzsteckers 1 in den Einsteckkanal 48 unter die Ansatzstege 24 gedrückt, wie es in Fig. 12 dargestellt ist. Um die Einführung zu erleichtern, sind die Laschen 11 in dieser Ausführungsform an der Stirnseite 46 leicht abgebogen.

In der vierten Ausführungsform (Fig. 17 und 18) sind die Laschen 11 gegenüber den voran beschriebenen Ausführungsformen verkürzt ausgebildet, da die Lasche 11 in dieser Ausführungsform nur mit dem Blechteil 50 in eine elektrische Verbindung gebracht werden muß. Zur Führung der Lasche 11 ist an den Längsseiten 8 des Gehäuses 2 jeweils ein Führungswinkel 53 vorgesehen, so daß im Einsteckkanal 48 die Lasche 11 der Sammelerde 5 zwischen den Führungswinkeln 53 und dem Blechteil 50 angeordnet ist.

Sind mehrere Schutzstecker 1 nebeneinander an den Längsseiten 8 verbunden, so wird eine Schutzsteckerleiste 31 gebildet.

Nachfolgend wird der Überspannungsfall kurz erläutert. Tritt eine Überspannung auf, so wird die Überspannung bzw. der Überstrom über die Kabeladern 38,39, den Schneid-Klemm-Kontakten 40,41, dem Gabelkontakt 47, die Leiterkontakte 13, 14, die Schmelzpille 30 zu der einen Polseite 29 des Überspannungsableiters 3 geleitet.

Der mit einem Edelgas gefüllte Überspannungsableiter 3 zündet, wodurch die Überspannung zum anderen Pol 28 des Überspannungsableiters 3 geleitet wird, der mit der Sammelerde 5 elektrisch verbunden ist. Die Überspannung wird somit über die Gabelkontakte 41 und die Sammelerde 5 zum Montagebügel 36 geleitet, der mit einer Erdleitung verbunden ist.

Bei einem dauerhaften Zünden des Überspannungsableiters 3 schmilzt durch die entstehende Wärme die Schmelzpille 30, wodurch der federnde Kurzschlußbügel 25, 26 die Lasche 11 der Sammelerde 5 bzw. das in Verbindung mit der Sammelerde 5 stehende Blechteil 50 kontaktiert und den Überspannungsableiter 3 kurzschließt (Fail-Safe-Verhalten). Eine Zerstörung des Schutzsteckers 1 durch Überhitzung wird somit verhindert.

## Patentansprüche

1. Schutzstecker für mit einer Sammelerde (5) versehene Schalt- oder Trennleisten (4) der Fernmeldetechnik aus einem Gehäuse (2) mit Überspannungsableitern (3) und Leiterkontakten (13,14),
**dadurch gekennzeichnet**,
daß das Gehäuse (2) einen entlang der einen Polseite (28) der Überspannungsableiter (3) verlaufenden Einsteckkanal (48) aufweist und
daß die Sammelerde (5) mit einer Lasche (11) versehen ist, die zur Erdverbindung der Überspannungsableiter (3) in den Einsteckkanal (48) eingreift.

2. Schutzstecker nach Ansprch 1,
**dadurch gekennzeichnet**,
daß die Leiterkontakte (13,14) Kurzschlußbügel (25,26) aufweisen, die nach dem Schmelzen einer Schmelzpille (30) in den Einsteckkanal (48) eingreifen.

3. Schutzstecker nach Anspruch 1,
**dadurch gekennzeichnet**,
daß jeder Überspannungsableiter (3) durch zwei federnde Haken (6,7) klemmend im Gehäuse (2) des Schutzsteckers (1) gehalten ist.

4. Schutzstecker nach Anspruch 3,
**dadurch gekennzeichnet**,
daß die federnden Haken (6,7) an den Gehäuselängsseiten (8) des Schutzsteckers (1) angeordnet sind.

5. Schutzstecker nach Anspruch 3,
**dadurch gekennzeichnet**,
daß die federnden Haken (6,7) zueinander gerichtet auf der Längsachse (9) des Schutzsteckers (1) angeordnet sind.

6. Schutzstecker nach Anspruch 1,
**dadurch gekennzeichnet**,
daß das Gehäuse (2) entlang der Polseiten (28) der Überspannungsableiter (3) ein Blechteil (50) aufweist, an dem die Polseiten (28) der Überspannungsableiter (3) anliegen.

7. Schutzstecker nach den Ansprüchen 1 und 5,
**dadurch gekennzeichnet**,
daß das Blechteil (50) mit Öffnungen (52) versehen ist, in die an den Schmalseiten (45) des Gehäuses (2) angeordnete Rasthaken (54) eingreifen.

8. Schutzstecker nach den Ansprüchen 1 und 5,
**dadurch gekennzeichnet**,
daß die Innenseite (55) des Blechteiles (50) als Kontaktfläche für die Kurzschlußbügel (25,26) und für die Polseiten (28) der Überspannungsableiter (3) und die Außenseite (56) des Blechteiles (50) als Kontaktfläche für die Lasche (11) der Sammelerde (5) dient.

9. Schutzstecker nach Anspruch 1,
**dadurch gekennzeichnet**,
daß die Überspannungsableiter (3) auf der Längsachse (9) des Gehäuses (2) in Reihe angeordnet sind.

10. Schutzstecker nach Anspruch 1,
**dadurch gekennzeichnet**,
daß mehrere Schutzstecker (1) nebeneinander als Schutzsteckerleiste (31) ausgebildet sind.

## Claims

1. A safety plug for switching or disconnecting rails (4) of the telecommunication technique provided with a collective earth terminal (5), comprising a casing (2) with voltage surge arresters (3) and conductor contacts (13, 14), characterized by that the casing (2) comprises an insertion channel (48) extending along the one pole side (28) of the voltage surge arresters (3), and that the collective earth terminal (5) is provided with a lug (11) engaging into the insertion channel (48) for connecting the voltage surge arresters (3) to earth.

2. A safety plug according to claim 1, characterized by that the conductor contacts (13, 14) comprise shorting brackets (25, 26) engaging, after melting of the melt element (30), into the insertion channel (48).

3. A safety plug according to claim 1, characterized by that each voltage surge arrester (3) is held in clamping manner in the casing (2) of the safety plug (1) by two resilient hooks (6,7).

4. A safety plug according to claim 3, characterized by that the resilient hooks (6, 7) are disposed at the longitudinal casing sides (8) of the safety plug (1).

5. A safety plug according to claim 3, characterized by that the resilient hooks (6, 7) are directed towards each other on the longitudinal axis (9) of the safety plug (1).

6. A safety plug according to claim 1, characterized by that the casing (2) comprises along the pole sides (28) of the voltage surge arresters (3) a sheet-metal part (50), against which the pole sides (28) of the voltage surge arresters (3) rest.

7. A safety plug according to claims 1 and 5, characterized by that the sheet-metal part (50) is provided with openings (52), into which engage the latch hooks (54) disposed at the narrow sides (45) of the casing (2).

8. A safety plug according to claims 1 and 5, characterized by that the interior (55) of the sheet-metal part (50) serves as a contact surface for the shorting brackets (25,26) and for the pole sides (28) of the voltage surge arresters (3), and the exterior (56) of the sheet-metal part (50) serves as a contact surface for the lug (11) of the collective earth terminal (5).

9. A safety plug according to claim 1, characterized by that the voltage surge arresters (3) are disposed in series on the longitudinal axis (9) of the casing (2).

10. A safety plug according to claim 1, characterized by that several safety plugs (1) are adapted side-by-side as a safety plug rail (31).

## Revendications

1. Fiche de protection pour boîtiers d'interruption ou de disjonction (4) munie d'une plaquette de mise à la terre collective (5) de la technique de télécommunications comprenant un logement (2) avec des parasurtensions (3) et des contacts conductifs (13,14),
**caractérisée en ce que**
le logement (2) présente un canal d'enfichage (48) s'étendant le long d'une face polaire (28) des parasurtensions (3) et
que la plaquette de mise à la terre collective (5) est munie d'une barre de liaison (11) engrènant dans le canal d'enfichage (48) pour relier les parasurtensions (3) à la terre.

2. Fiche de protection selon la revendication 1,
**caractérisée en ce que**
les contacts conductifs (13,14) présentent des étriers de court-circuit (25,26), engrènant dans le canal d'enfichage (48) après la fusion d'une pastille fusible (30).

3. Fiche de protection selon la revendication 1,
**caractérisée en ce que**
chaque parasurtension (3) est maintenu de façon serrée dans le logement (2) de la fiche de protection 1 par deux crochets élastiques (6,7).

4. Fiche de protection selon la revendication 3,
**caractérisée en ce que**
les crochets élastiques (6,7) sont disposés sur les faces longitudinales (8) du logement de la fiche de protection (1).

5. Fiche de protection selon la revendication 3,
**caractérisée en ce que**
les crochets élastiques (6,7) sont dirigés l'un contre l'autre sur l'axe longitudinal (9) de la fiche de protection (1).

6. Fiche de protection selon la revendication 1,
caractérisée en ce que
le logement (2) présente le long des faces polaires (28) des parasurtensions (3) un élément de tôle sur lequel repose les faces polaires (28) des parasurtensions (2).

7. Fiche de protection selon les revendications 1 et 5,
**caractérisée en ce que**
l'élément de tôle (50) est muni d'ouvertures (52) dans lesquelles engrènent les crochets d'arrêt (54) disposés sur les côtés courts (45) du logement (2).

8. Fiche de protection selon les revendications 1 et 5,
**caractérisée en ce que**
la face intérieure de l'élément de tôle (50) sert de surface de contact pour les étriers de court-circuit (25,26) et pour les faces polaires (28) des parasurtensions (3) et la face extérieure (56) de l'élément de tôle (50) de surface de contact pour la barre de liaison (11) de la plaquette de mise à la terre collective (5).

9. Fiche de protection selon la revendication 1,
**caractérisée en ce que**
les parasurtensions (3) sont disposés en rangées sur l'axe longitudinal du logement (2).

10. Fiche de protection selon la revendication 1,
**caractérisée en ce que**
plusieurs fiches de protection (1) sont montées en parallèle pour former une barrette de fiches de protection (31).
